# EUROPÄISCHE PATENTSCHRIFT

(11) **EP 1 013 007 B1**
(45) Veröffentlichungstag und Bekanntmachung des Hinweises auf die Patenterteilung: **29.05.2002**
(21) Anmeldenummer: 98939530.6
(22) Anmeldetag: 25.06.1998
(51) Int. Cl.: H04B 7/26, H04B 7/155

(54) **SENDE UND EMPFANGSVORRICHTUNG ZUR VERSTÄRKUNG ZWISCHEN ORTSFESTEN UND MOBILEN STATIONEN MIT FUNKKANAL ERKENNUNG**
Send and receive device for the amplification and detection of the radio channel between fixe and mobile stations
DISPOSITIF D'EMISSION ET DE RECEPTION POUR L'AMPLIFICATION ENTRE DES STATIONS FIXES ET DES STATIONS MOBILES AVEC DETECTION DU CANAL RADIO

(30) Priorität: 25.06.1997 DE 19726940
(43) Veröffentlichungstag der Anmeldung: 28.06.2000
(73) Patentinhaber: Littlefeet, Inc., Poway, CA 92064 (US)
(72) Erfinder: Scheinert, Stefan, Milpitas, CA 95035 (US)
(74) Vertreter: Küchler, Stefan
(86) Internationale Anmeldenummer: EP9803880
(87) Internationale Veröffentlichungsnummer: WO9900918

(56) Entgegenhaltungen:
- EP-A- 0 274 857
- GB-A- 2 260 467
- US-A- 5 343 214

## Beschreibung

Die Erfindung richtet sich auf eine Sende- und Empfangsvorrichtung zur Verstärkung der Sendesignale zwischen einer ortsfesten und einer mobilen Sendestation in einem flächendeckenden Funknetz sowie auf ein Verfahren zum Betrieb einer derartigen Sende- und Empfangsvorrichtung.

Die vielfältigen Möglichkeiten von Mobilfunktelefonen wurden sehr schnell von der Geschäftswelt erkannt und bilden mittlerweile für manchen Geschäftsmann die Grundlage seines Erfolges. Dies resultiert aus dem Vorteil, daß eine Person über ein Mobilfunktelefon prinzipiell überall und somit jederzeit erreichbar ist. Allerdings gilt dies nicht uneingeschränkt. Denn infolge der niedrigen Sendeleistung von Mobilfunktelefonen können bereits normal dicke Hauswände eine derartige Dämpfung der Funksignale hervorrufen, daß die Empfangsfeldstärke für eine Kommunikation nicht ausreicht. Daher versagt die Kommunikation oftmals gerade dann, wenn sich ein Geschäftsmann mit seinem Mobilfunktelefon im eigenen Haus oder Büro befindet. Hierdurch kann manches Geschäft durch die Lappen gehen, und viele Geschäftsleute wären froh darüber, wenn die Empfangsfeldstärke in dem eigenen Haus oder Büro für eine Kommunikation ausreichend wäre.

Zu diesem Zweck werden bereits Gleichkanal-Breitband-Repeater eingesetzt. Hierbei ist die Entkoppelung zwischen Sende- und Empfangsantenne sehr kritisch, durch die Verstärkung zusätzlicher, nicht benötigter Frequenzen entstehen Interferenzen sowie gegebenenfalls ein erhöhtes Grundrauschen, so daß diese Vorrichtungen in der Praxis keine große Verbreitung erfahren haben.

Aus der EP-OS 0 342 858 ist zwar eine Sende- und Empfangsvorrichtung zur Verstärkung der Funksignale in einem geschlossenen Gebäude bekannt geworden. Hierbei ist jedoch der Installationsaufwand erheblich, da einerseits eine Antenne auf dem Hausdach plaziert werden muß, andererseits verfügt diese Sendeund Empfangsvorrichtung über einen Bandpaßfilter, dessen Frequenz von einem Fachmann auf die in der betreffenden Funkzelle verwendeten Frequenzen abgestimmt werden muß. Daher ist der Installationsaufwand eines derartigen Systems enorm hoch.

Das Dokument EP-A-0 274 857 veröffentlicht eine Sende- und Empfangsvorrichtung zur Verstärkung der Sendesignale zwischen einer ortsfesten und einer mobilen Sendestation in einem flächendeckenden Funknetz, mit einer Antenne zur Anbindung an die ortsfeste Sendestation, mit einem an die Antenne angeschlossenen, kanalselektiven Filter, mit einer an dem Filterausgang angeschlossenen Einrichtung zur Messung der Empfangsfeldstärke und mit einer daran angeschlossenen Vorrichtung zur Erkennung der in einer Funkzelle des Funknetzes verwendeten Funkkanäle, wobei
- eine Einrichtung zur Demodulation des kanalselektiv gefilterten Funksignals vorgesehen ist und
- die Demodulationseinrichtung ausgangsseitig mit der Kanalerkennungseinrichtung gekoppelt ist.

Daraus resultiert das die Erfindung initiierende Problem, eine Sende- und Empfangsvorrichtung zur selektiven Verstärkung ausschließlich der zu einer Funkzelle gehörenden Kanäle zu schaffen, die ohne Vorkenntnisse sowie bei minimalem Aufwand und somit auch von technischen Laien installiert werden kann.

Die Erfindung löst dieses Problem durch eine Vorrichtung zur selbsttätigen Erkennung der in einer Funkzelle des Funknetzes verwendeten Funkkanäle bzw. -frequenzen. Die erfindungsgemäße Sende- und Empfangsvorrichtung ist einerseits zwar transparent, d.h., sie wird weder von dem Funknetz noch von einer mobilen Sendestation überhaupt wahrgenommen, verfügt aber dennoch über eine eigene Intelligenz, welche es ihr erlaubt, sich harmonisch in die "Frequenzlandschaft" des Funknetzes zu integrieren. Bei einer derartigen Sendeund Empfangsvorrichtung muß daher keinerlei manueller Abgleich von Filterfrequenzen durchgeführt werden, es genügt vielmehr das Aufstellen gemäß einfachen, in einer Bedienungsanleitung spezifizierten Regeln.

Das Kanalspektrum üblicher Mobilfunknetze umfaßt mehrere Arten von Funkkanälen: In jeder Funkzelle gibt es mindestens einen Funkkontrollkanal (broadcast control channel bcch), der ständig für alle Mobilfunkeinheiten zur Verfügung steht und diesen bei einem Anruf sodann einen von mehreren zugeordneten Steuerkanälen (slow dedicated control channel sdcch) zuweist, auf welchen sodann die Übertragungsparameter für eine aufzubauende Funkverbindung zwischen dem Funknetz und der Mobilstation ausgetauscht werden. Für die eigentliche Kommunikation werden sodann Verkehrsfunkkanäle (traffic channel tch) verwendet. Nach GSM-Norm umfaßt jeder Frequenzkanal acht Zeitschlitze, von denen jeder als bcch, sdcch oder tch verwendet werden kann. Andererseits müssen die in einer Funkzelle benutzten bcch, sdcch und tch nicht dem selben Frequenzkanal zugeordnet sein. Im folgenden soll der Begriff "Kanal" als Frequenzkanal aufgefaßt werden. Da diese Frequenzkanäle im Frequenzspektrum deutlich voneinander entfernt sein können, sieht die Erfindung vor, daß in der erfindungsgemäßen Sende- und Empfangsvorrichtung eine, vorzugsweise aber mehrere, parallele Sende- und Empfangszweige angeordnet sind.

Je nach der Kanalstruktur des betreffenden Funknetzes können die zugeordneten Steuerkanäle und/oder die Verkehrskanäle jeweils zu benachbarten Gruppen zusammengefaßt sein. In einem solchen Fall ist es möglich, daß die Bandbreite eines Sende- und Empfangszweigs nicht nur einen einzigen, sondern gleichzeitig mehrere Funkkanäle umfaßt, so daß dieselben gemeinsam verstärkt werden.

Damit die Übertragungsfrequenzen des Funkkontrollkanals, eines zugeordneten Steuerkanals und/oder eines Verkehrskanals entsprechend den lokalen Gegebenheiten in der betreffenden Funkzelle des Funknetzes beliebig angepaßt werden können, sollten die Sendefrequenzen unterschiedlicher Sende- und Empfangszweige unabhängig voneinander einstellbar sein. Dies gilt vorzugsweise auch für einander antiparallel geschaltete Übertragungszweige für eine bidirektionale Kommunikation.

In zunehmendem Umfang werden derzeit Funknetze durch frequenzumsetzende Repeater verdichtet, die mit Ausnahme der Frequenzumsetzung ansonsten jedoch transparent sind. Derartige Repeater definieren eigene Funkzellen mit gegenüber den Nachbarfunkzellen abgegrenzten Sendefrequenzen und haben die Besonderheit, daß ein inhaltlich identisches Funksignal up- und downlinkseitig des Repeaters über zwei verschiedene Sendefrequenzen übertragen wird, wobei die auf dem betreffenden Kanal zur Identifikation übertragene Kanalnummer ausschließlich mit dem Sendekanal der downlinkseitigen Funkschnittstelle zwischen dem frequenzumsetzenden Repeater und einer mobilen Sendestation übereinstimmt, während diese Kanalinformation für die "netzinterne" Kommunikation zwischen der eigentlichen, ortsfesten Sendestation und dem frequenzumsetzenden Repeater nicht mit der dort verwendeten Kanalfrequenz übereinstimmt. Hier sieht die Erfindung vor, daß die erfindungsgemäße Sende- und Empfangsvorrichtung parallel zu einem derartigen, frequenzumsetzenden Repeater betrieben wird, d.h. sie wird uplinkseitig direkt an die eigentliche, ortsfeste Sendestation und downlinkseitig direkt an die mobile Sendestation angekoppelt. In diesem Fall muß die erfindungsgemäße Sende- und Empfangsvorrichtung die Frequenzumsetzung des Repeaters nachvollziehen, wozu es erforderlich ist, daß die Frequenzen der uplink- und downlinkseitigen Funkschnittstellen eines Sende- und Empfangszweigs unabhängig voneinander einstellbar sind. Dadurch kann die erfindungsgemäße Sende- und Empfangsvorrichtung sowohl in Funkzellen ohne Frequenzumsetzung als auch in Funkzellen mit frequenzumsetzenden Repeatern betrieben werden.

Sofern die betreffende Sende- und Empfangsvorrichtung in der Funkzelle eines frequenzumsetzenden Repeaters betrieben wird, sind die empfangenen und die weiter übertragenen Signale frequenzmäßig voneinander entkoppelt, so daß es möglich ist, eine uplinkseitige und eine downlinkseitige Antenne in dem Gehäuse der Sende- und Empfangsvorrichtung zu integrieren. In diesem Fall ist es sogar möglich, für die uplinkseitige und die downlinkseitige Funkschnittstelle eine einzige Antenne zu verwenden.

Um eine ausreichende Empfangsfeldstärke auf der uplinkseitigen Funkschnittstelle zu erhalten, empfiehlt die Erfindung, daß die betreffende Antenne an einem Fenster befestigbar ist. Es kann sich hierbei bspw. um eine Art Selbstklebefolie mit eingeschlossener Antenne handeln.

Das primäre Kriterium zur Erkennung eines in einer Funkzelle verwendeten Funkkanals wird durch dessen Empfangsfeldstärke gebildet. Zu deren Ermittlung sind eine oder mehrere Meßeinrichtungen in der Sende- und Empfangsvorrichtung vorhanden. Um die interne Schaltung der erfindungsgemäßen Sende- und Empfangsvorrichtung nicht zu kompliziert werden zu lassen, sieht die Erfindung vor, daß die Einrichtungen zur Messung der Empfangsfeldstärke jeweils einem Sende- und Empfangszweig zugeordnet sind. Die Meßeinrichtungen können somit in die Schaltungen der Sende- und Empfangszweige vollständig integriert sein.

Ein weiteres Kriterium zur Orientierung in dem "Kanalspektrum" der betreffenden Funkzelle stellt die auf den einzelnen Funkkanälen übertragene Information dar. Um diese zu ermitteln, verfügt die erfindungsgemäße Sende- und Empfangsvorrichtung über eine oder mehrere Einrichtungen zur Demodulation und/oder Dekodierung von Funksignalen. Auch hier kann jedem Sende- und Empfangszweig eine eigene Demodulations-, und/oder Dekodiereinrichtung zugeordnet sein. Die erfindungsgemäße Demodulations- oder Dekodiereinrichtung ist vorzugsweise am Ausgang eines Empfangszweigs angekoppelt oder ankoppelbar.

Ferner muß die erfindungsgemäße Sende- und Empfangsvorrichtung erkennen, ob sie sich in einer Funkzelle mit direkter Funkverbindung zwischen einer ortsfesten Sendestation und einer mobilen Sendestation befindet oder in einer Funkzelle, die über einen frequenzumsetzenden Repeater versorgt wird. Zu diesem Zweck sind in der erfindungsgemäßen Sende- und Empfangsvorrichtung ein oder mehrere Bausteine zum Vergleich des einer tatsächlich verwendeten Kanalfrequenz zugeordneten Funkkanals mit der auf der betreffenden Frequenz empfangenen und demodulierten Kanalnummer vorgesehen. Hierbei ist es günstig, die betreffenden Informationen in digitale Ziffern umzuwandeln und diese mittels eines binär aufgebauten Komparators miteinander zu vergleichen. Auch diese Vergleichsbausteine können für jeden Sende- und Empfangszweig getrennt vorhanden sein.

Schließlich sollten die gefundenen Funkkanäle bzw. Frequenzen in einem Speicher abgelegt werden, so daß bei einem späteren Kanalbefehl die erfindungsgemäße Sende- und Empfangsvorrichtung sofort die entsprechenden Sendefrequenzen auffinden kann.

Die Kanalerkennungsvorrichtung der erfindungsgemäßen Sende- und Empfangsvorrichtung muß nach einem ausgeklügelten Verfahren betrieben werden, um bei allen möglichen Arten von Mobilfunknetzen die jeweils in der betreffenden Funkzelle verwendeten Kanäle aufzuspüren. Hierbei sind einerseits unterschiedliche Frequenzbereiche zu berücksichtigen wie auch unterschiedliche Signalcodes. Darüber hinaus muß die Kanalerkennungsvorrichtung feststellen, ob sie sich in einer Funkzelle mit direkter Funkverbindung zwischen einer ortsfesten Sendestation und einer Mobilfunkstation befindet, oder in einer Funkzelle mit einem frequenzumsetzenden Repeater. Im letzteren Falle müssen für jeden Kanal beide Frequenzen ermittelt werden, so daß eine signalmäßige Parallelschaltung zu dem vom Netzbetreiber installierten Repeater möglich ist. Bei dieser Kanalerkennung können wiederum verschiedene Voraussetzungen gegeben sein: Je nach Funknetz ist es möglich, daß die beiden Frequenzen eines Kanals um einen jeweils festen Frequenzoffset voneinander beabstandet sind, oder es kann sich um ein Funknetz mit beliebigen Kanalzuweisungen up- und downlinkseitig eines betreiberseitig installierten Repeaters handeln. Wie im folgenden erläutert wird, läßt sich eine erfindungsgemäße Kanalerkennungsvorrichtung nach einem Verfahren betreiben, welches all den obigen Anforderungen genügt.

Dieses Verfahren zeichnet sich dadurch aus, daß in einem ersten Schritt die Empfangsfeldstärke der einem Funknetz zugewiesenen Kanäle ermittelt und aus den Kanälen mit der größten Empfangsfeldstärke einer oder mehrerer Funkkontrollkanäle (broadcast control channel bch) ermittelt werden, und daß diese im folgenden dekodiert werden, um anhand der dort gesendeten Informationen die Kanäle bzw. Frequenzen eines oder mehrerer zugeordneter Steuerkanäle (slow dedicated control channel sdcch) und/oder Verkehrskanäle (trafic channel tch) zu ermitteln. Natürlich kann diesen Schritten eine Initialisierungsphase vorangehen, bei welcher der Besitzer einer erfindungsgemäßen Sende- und Empfangsvorrichtung das mit seinem Mobilfunktelefon genutzte Funknetz an einem Wahlschalter einstellt. Die Kanalerkennungsvorrichtung kann anhand der Stellung dieses Wahlschalters aus einem internen Speicher sofort den von diesem Funknetz verwendeten Frequenzbereich herausfinden und evtl. weitere Besonderheiten dieses Funknetzes, bspw., ob frequenzumsetzende Repeater verwendet werden oder nicht. In einem ersten Schritt wird ein günstiger Funkkontrollkanal gesucht, der von der erfindungsgemäßen Sende- und Emfpangsvorrichtung mit ausreichender Feldstärke empfangen wird. Zu diesem Zweck wird zunächst ein Teil oder der gesamte Frequenzbereich des betreffenden Funknetzes hinsichtlich der jeweils auf einen Kanal bezogenen Empfangsfeldstärke ausgemessen, und die Kanäle mit den höchsten Empfangsfeldstärken werden vorgemerkt. Diese werden sodann dekodiert, um festzustellen, welche Kanäle der Funkkontrolle dienen. Hat die Kanalerkennungsvorrichtung auf diesem Weg einen optimalen Funkkontrollkanal gefunden, kann sie die auf diesem gesendeten Informationen weiter auswerten.

Hierbei ist es möglich, daß auf den Funkkontrollkanälen in vorgegebenen Zeitabständen Meldungen gesendet werden, die Informationen über die in der betreffenden Funkzelle verwendeten Kanäle bzw. Frequenzen enthalten, und daß diese Meldungen von der Kanalerkennungsvorrichtung ausgewertet werden. Diese erfindungsgemäße Maßnahme setzt eine Kooperation des betreffenden Netzbetreibers voraus, der durch Generierung entsprechender Meldungen die Installation von individuellen Signalverstärkungsanlagen unterstützt und somit sein Funknetz für Interessenten attraktiver macht. Sofern ein Netzbetreiber in seinem Funknetz derartige Funkmeldungen zur Verfügung stellt, gestaltet sich die Initialisierungsphase einer erfindungsgemäßen Kanalerkennungsvorrichtung relativ einfach: Nach Auswahl eines optimalen Funkkontrollkanals wird dieser dekodiert und auf die nächste Informationsmeldung gewartet. Diese wird sodann ausgewertet, um für den Betrieb der erfindunsgemäßen Sende- und Empfangsvorrichtung sämtliche notwendigen Informationen zu erhalten. Es empfiehlt sich, die Empfangsfeldstärke des ausgewählten Funkkontrollkanals wie auch den Inhalt der dort gesendeten Informationsmeldungen regelmäßig zu überprüfen, da von einem Netzbetreiber manchmal Änderungen in den Kanalzuweisungen vorgenommen werden.

Zusätzlich zu der Information über die in der betreffenden Funkzelle verwendeten Kanäle bzw. Frequenzen können auf diesem Weg auch Informationen übermittelt werden, aus denen die erfindungsgemäße Kanalerkennungsvorrichtung entnehmen kann, ob sie sich in einer Funkzelle mit betreiberseitig installierten, frequenzumsetzenden Repeatern befindet oder in einer Funkzelle, die von einer ortsfesten Sendestation direkt versorgt wird; weiterhin können Informationen gesendet werden, die einen Aufschluß über in der betreffenden Funkzelle verwendete Frequenzoffsets enthalten, insbesondere, ob bei frequenzumsetzenden Repeatern ein fester Frequenzoffset eingehalten ist. Weiterhin ist es möglich, Empfehlungen zu senden, welchen Funkzonen oder Funkkanälen eine erfindungsgemäße Sende- und Empfangsvorrichtung sich zuordnen soll, sofern hinsichtlich der Empfangsfeldstärke eine Auswahlmöglichkeit besteht. Andererseits kann auch der Verkehr auf bestimmten Kanälen oder in bestimmten Funkzellen oder in durch andere, frequenzumsetzende Sendestationen definierten Unter-Funkzonen gemessen werden, und bei Aus- oder Überlastung kann eine entsprechende Meldung erzeugt werden, die zusätzliche, erfindungsgemäße Sende- und Empfangsvorrichtungen davon abhält, sich bereits überlasteten Funkzellen zuzuordnen.

Werden in einem Mobilfunknetz keine derartigen Funkmeldungen zur Verfügung gestellt, muß die Kanalerkennungsvorrichtung die betreffenden Kanäle (zugeordnete Steuerkanäle sdcch und Verkehrskanäle tch) selbst suchen. Zu diesem Zweck werden in einem weiteren Schritt auf dem eingestellten Funkkontrollkanal gesendete Kanalbefehle von der Kanalerkennungsvorrichtung ausgewertet. Auf diesem Weg können zunächst zugeordnete Steuerkanäle sdcch gefunden werden und durch deren Dekodierung anschließend die in der betreffenden Funkzelle verwendeten Verkehrskanäle tch. Auf diesem Weg ist es für die erfindungsgemäße Vorrichtung möglich sukzessive sämtliche in der betreffenden Funkzelle relevanten Kanäle zu ermitteln.

Nach dem oben beschriebenen Verfahren ist es möglich, sämtliche Kanäle der Funkschnittstelle zwischen einer ortsfesten Sendestation oder einem frequenzumsetzenden Repeater und einer Mobilstation zu ermitteln. Jedoch ist es in einer Funkzelle mit einem frequenzumsetzenden Repeater wünschenswert, daß die erfindungsgemäße Sende- und Empfangsvorrichtung auch die Kanäle und Frequenzen der Funkschnittstelle zwischen der ortsfesten Sendestation und dem frequenzumsetzenden Repeater ermittelt. Hierzu wird zunächst - beginnend bei dem ausgewählten Funkkontrollkanal - die dort gesendete und dekodierte Kanalnummer mit der tatsächlich empfangenen Kanalfrequenz verglichen. Bei Übereinstimmung weiß die Kanalerkennungsvorrichtung, daß es sich hierbei um eine Funkschnittsteile zu einer Mobilstation handelt, bei einer Diskrepanz zwischen diesen beiden Kanalnummern empfängt die erfindungsgemäße Sende- und Empfangsvorrichtung einen Kanal der Funkschnittstelle zwischen der ortsfesten Sendestation und einem frequenzumsetzenden Repeater.

In einer Funkzelle mit Frequenzumsetzung schaltet sich die erfindungsgemäße Sende- und Empfangsvorrichtung parallel zu dem dort vom Netzbetreiber installierten Repeater, indem die uplinkseitige Sende- und Empfangseinrichtung auf die tatsächliche Frequenz eines Kanals, dessen tatsächliche Kanalfrequenz nicht mit der gesendeten Kanalnummer übereinstimmt, die downlinkseitige Sende- und Emfpangseinrichtung dagegen auf den Kanal mit der gesendeten Kanalnummer abgestimmt wird. Dieser Betrieb bietet einerseits den Vorteil, daß die Signallaufzeit auf ein Minimum reduziert ist. Andererseits sind die uplink- und downlinkseitigen Signale der erfindungsgemäßen Sende- und Empfangseinrichtung frequenzmäßig voneinander getrennt und somit optimal voneinander entkoppelt, so daß Störungen nahezu vollständig ausgeschlossen sind.

Auch die Kanäle bzw. Frequenzen der zugeordneten Steuerkanäle sdcch und Verkehrskanäle tch werden gemäß der obigen Regel up- und downlinkseitig voneinander getrennt eingestellt. Hierfür müssen auch die betreffenden Frequenzen dieser Kanäle an der Funkschnittstelle zwischen der ortsfesten Sendestation und dem frequenzumsetzenden Repeater bestimmt werden. Dies kann erfindungsgemäß dadurch geschehen, daß die tatsächliche Kanalfrequenz eines zugeordneten Steuerkanals sdcch und/oder Verkehrskanals tch, sofern dieser nicht mit der gesendeten Kanalnummer übereinstimmt, durch Vergleich der gesendeten Meldungen mit den auf weiteren, hinsichtlich ihrer Empfangsfeldstärke ausgewählten Kanälen gesendeten Meldungen ermittelt werden. Dieses Verfahren ist notwendig, wenn von dem Netzbetreiber weder eine Informationsmeldung zur Verfügung gestellt wird noch ein fester Frequenzoffset zwischen einander zugeordneten Kanälen der beiden Funkschnittstellen eines frequenzumsetzenden Repeaters eingehalten wird. Solchenfalls werden weitere Kanäle mit ausreichender Empfangsfeldstärke dekodiert, und die dort empfangenen Informationen und/oder Meldungen werden mit den entsprechenden Informationsinhalten der Funkschnittstelle zwischen dem frequenzumsetzenden Repeater und der Mobilstation verglichen, um eine Korrelation festzustellen. Dieses Verfahren wird solange wiederholt, bis die zweite, uplinkseitig des frequenzumsetzenden Repeaters verwendete Frequenz des betreffenden Informationskanals gefunden ist.

Um einen derartigen Vergleich auszuführen, können mehrere Empfangszweige der erfindungsgemäßen Sende- und Empfangseinrichtung simultan betrieben werden. Ist dies nicht möglich, so können für den Informationsvergleich während eines Verbindungsaufbaus sequenziell gesendete Meldungen herangezogen werden.

Um die gewonnenen Informationen für den weiteren Betrieb der erfindungsgemäßen Sende- und Emfpangsvorrichtung zu erhalten, sieht die Erfindung schließlich vor, daß die einander entsprechenden Kanalnummern und tatsächlichen Kanalfrequenzen in zugeordneter Form gespeichert werden. Dekodiert die erfindungsgemäße Einrichtung demnach zu einem späteren Zeitpunkt einen Kanalbefehl, so ist sie in der Lage, durch Auslesen des Speichers sofort die Frequenzen zu erkennen, auf welche die uplinkseitigen und downlinkseitigen Sende- und Empfangseinrichtungen einzustellen sind.

Weitere Merkmale, Einzelheiten und Vorteile auf der Basis der Erfindung ergeben sich aus der folgenden Beschreibung einiger Ausführungsbeispiel der Erfindung sowie anhand der Zeichnung die zeigt in:
- Fig. 1: ein Übersichtsschaubild der Kommunikation in einer Funkzelle
- Fig. 2: ein Blockschaltbild einer erfindungsgemäßen Sende- und Empfangsvorrichtung bei Verwendung in einer Funkzelle mit Frequenzumsetzung,
- Fig. 3 - 6: Teile eines Flußdiagramms für das erfindungsgemäße Betriebsverfahren, sowie
- Fig. 7: einen Ausschnitt aus einem Funknetz.

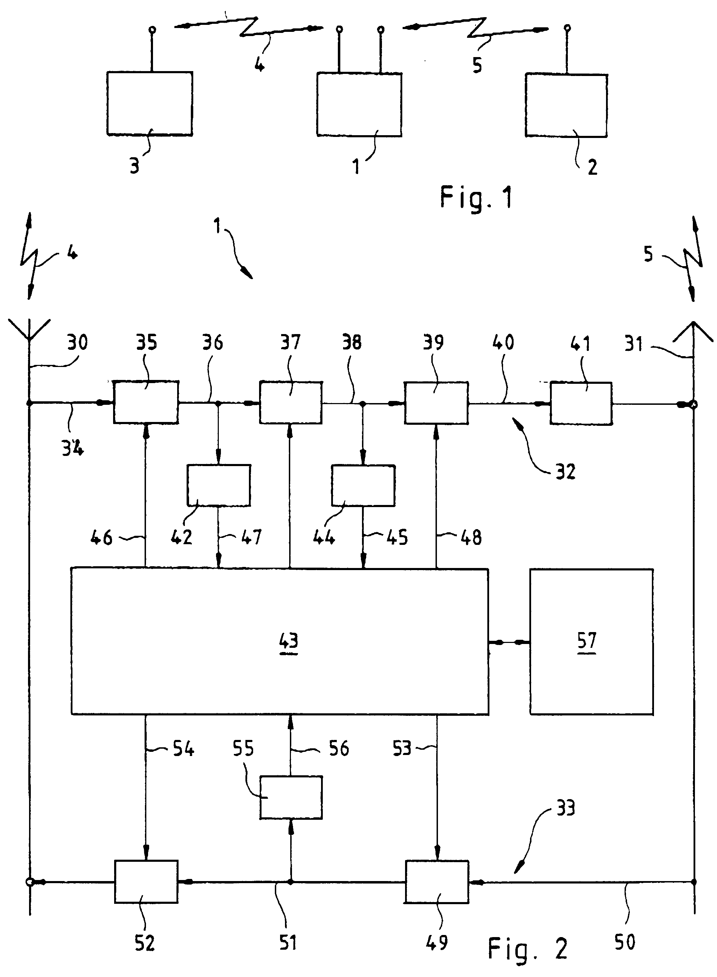

In Figur 1 ist eine erfindungsgemäße Sende- und Empfangsvorrichtung 1 wiedergegeben, die zur Verbesserung des Signalempfangs einer mobilen Funkstation 2 zwischen dieser und der ortsfesten Sendestation 3 der betreffenden Funkzelle eingefügt ist. Es ergibt sich somit eine Funkschnittstelle 4 zu der ortsfesten Sendestation 3 sowie eine Funkschnittstelle 5 zu der Mobilstation 2. Je nachdem, ob ohne die erfindungsgemäße Sende- und Emfpangsvorrichtung 1 die Mobilstation 2 in der betreffenden Funkzelle direkt mit der ortsfesten Sendestation 3 kommunizieren würde oder über einen dazwischengeschalteten, frequenzumsetzenden Repeater, haben die beiden Funkschnittstellen 4, 5 entweder identische Frequenzen oder voneinander abweichende Frequenzen.

Im einfachsten Fall unterstützt die erfindungsgemäße Sende- und Empfangsvorrichtung 1 nur eine Mobilstation 2, deren Identifikationsnummer einprogrammiert wird, wodurch sich der Aufbau der erfindungsgemäßen Vorrichtung vereinfacht zu einem einzigen Sende- und Empfangszweig bzw. zwei einander antiparallel geschalteten Zweigen, auch wenn die Zelle selbst zu mehreren Kanälen ausgewiesen wird (Einkanalrepeater).lm allgemeinen wird jedoch die erfindungsgemäße Vorrichtung 1 zur Verwendung in Bürogebäuden mit mehreren Sendezweigen ausgerüstet sein (Mehrkanalrepeater).

Um sich adaptiv an die Gegebenheiten in einer bestimmten Funkzelle anpassen zu können, sind die Sendezweige der erfindungsgemäßen Sende- und Empfangsvorrichtung 1 kanal- bzw. frequenzmäßig unabhängig voneinander einstellbar. Die in der betreffenden Funkzelle verwendeten Kanäle werden von einer in der Sende- und Empfangsvorrichtung 1 integrierten Kanalerkennungseinheit ermittelt und abgespeichert und zur Einstellung der Sendezweige herangezogen. Die Kanalerkennungseinrichtung erhält zu diesem Zweck Informationen über die Frequenz und die Empfangsfeldstärke eines empfangenen Signals sowie über die dekodierten Meldungen.

Der innere Aufbau eines erfindungsgemäßen Einkanalrepeaters 1 ist in Figur 2 dargestellt. Man erkennt eine erste Antenne 30 zur uplinkseitigen Kommunikation über die Funkschnittstelle 4 mit einer ortsfesten Sendestation 3 der betreffenden Funkzelle 25 und eine zweite Antenne 31 zur downlinksseitigen Kommunikation über die Funkschnittstelle 5 zu der Mobilstation 2. In einem downlinkseitig gerichtet verstärkenden Signalzweig 32 werden an der Antenne 30 empfangene Signale verstärkt und an der Antenne 31 abgestrahlt, während ein dazu antiparallel geschalteter Signalpfad 33 über die Antenne 31 von der Mobilstation 2 empfangene Signale zu der Antenne 30 leitet, wo sie in Richtung zu der ortsfesten Sendestation 3 mit verstärkter Amplitude abgestrahlt werden.

In dem downlinkseitigen Signalpfad 32 werden die Antenneneingangssignale 34 zunächst kanalselektiv gefiltert 35, und der ausgewählte Empfangskanal 36 wird sodann in einer nachgeschalteten Überlagerungsstufe 37 auf eine feste Zwischenfrequenz 38 herabgemischt, um sodann in einer weiteren Überlagerungsstufe 39 auf die gewünschte Ausgangsfrequenz 40 umgesetzt, verstärkt 41 und von der Antenne 31 abgestrahlt zu werden.

Eine Meßschaltung 42 ist in der Lage, aus dem kanalselektiv gefilterten Signal 36 die betreffende Empfangsfeldstärke zu ermitteln und das Meßergebnis an eine Auswertebaugruppe 43 zu übermitteln. Die Auswertebaugruppe 43 erhält ferner das in einer an das Zwischenfrequenzsignal 38 angekoppelten Baugruppe 44 demodulierte und gegebenenfalls dekodierte, downlinkseitig gerichtete Signal 45.

Andererseits ist die Auswertebaugruppe 43 durch betreffende Steuerleitungen 46 - 48 mit dem Antenneneingangsfilter 35 und den beiden Mischstufen 37, 39 gekoppelt, um sowohl die Empfangsfrequenz 34 als auch die Sendefrequenz 40 unabhängig voneinander einstellen zu können.

Die Auswertebaugruppe 43 ist somit in die Lage versetzt, einen beliebigen Empfangskanal 34 einzustellen und die zugeordnete Empfangsfeldstärke 36 zu messen 42 und darüber hinaus auch das übertragene Signal zu demodulieren und gegebenenfalls dekodieren, um dessen Inhalt auswerten zu können.

In dem uplinkseitigen Signalzweig 33 findet ebenfalls in einer ersten Baugruppe 49 eine Filterung des Antenneneingangssignals 50 sowie eine Umsetzung auf eine feste Zwischenfrequenz 51 statt. Aus dieser festen Zwischenfrequenz 51 kann eine nachgeschaltete Baugruppe 52 eine gewünschte Sendefrequenz erzeugen und das Signal auf die gewünschte Sendeleistung verstärken, so daß es von der Antenne 30 in Richtung auf die ortsfeste Sendestation 3 abgestrahlt wird. Um auch den uplinkseitigen Signalpfad 33 an die verschiedenen Frequenzanforderungen in einer Funkzelle 25 anpassen zu können, ist die Auswerteeinheit 43 in die Lage versetzt, über Steuerleitungen 53, 54 die Empfangsbaugruppe 49 wie auch die Sendebaugruppe 52 unabhängig voneinander auf bestimmte Signalfrequenzen abzustimmmen.

Bei der dargestellten Ausführungsform eines Einkanalrepeaters 1 muß die Auswerteeinheit 43 zusätzlich entscheiden, ob ein Verbindungsaufbau von der zugelassenen Mobilstation 2 gewünscht wird oder von einer anderen, fremden Mobilstation. Hierzu wird das auf eine feste Zwischenfrequenz 51 umgesetzte, uplinkseitige Sendesignal 33 in einer an das Zwischenfrequenzsignal 51 angekoppelten Baugruppe 55 demoduliert und gegebenenfalls dekodiert, so daß die Auswerteeinheit 43 aus dem dekodierten Signal 56 die Identifikationsnummer der Mobilstation 2 erkennen und gegebenenfalls aktiv werden kann.

Die von der Auswerteeinheit 43 nach den im folgenden beschriebenen Verfahren gefundenen Korrespondenzen zwischen den in der betreffenden Funkzelle 25 verwendeten Kanalnummern und -frequenzen werden von der Auswerteeinheit 43 in einer Speicherbaugruppe 57 abgelegt, so daß sie bei Bedarf jederzeit zur Verfügung stehen. Die Auswerteeinheit 43 kann bspw. in Form eines Microprozessors ausgebildet sein.

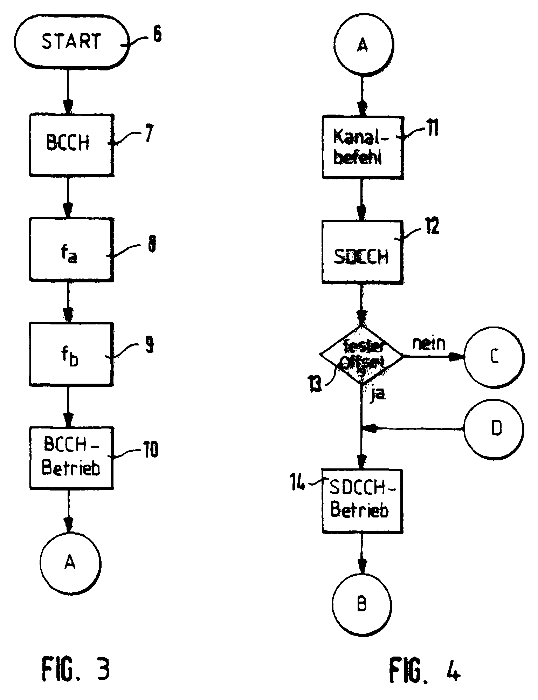

Die Betriebsweise dieser Kanalerkennungseinrichtung soll im folgenden unter Bezugnahme auf die Figuren 3 bis 6 erläutert werden.

Nach dem Aufstellen und Einschalten 6 der erfindungsgemäßen Sende- und Empfangsvorrichtung 1 überprüft diese anhand der eingestellten Wahlschalter, welches Funknetz von dem Anwender verwendet wird, und holt aus einem internen Speicher Informationen über die dem betreffenden Funknetz zugewiesenen Sendekanäle. Diese Sendekanäle werden sodann in einem ersten Schritt 7 an einem Empfangszweig nacheinander eingestellt und jeweils die Empfangsfeldstärke gemessen. Die Kanalerkennungseinrichtung speichert hierbei bspw. 10 Nummern von Kanälen, welche mit der höchsten Feldstärke empfangen werden. Diese Kanäle werden sodann demoduliert und ausgewertet, um hieraus sämtliche Funkkanäle bcch auszuwählen.

In Funkzellen mit Frequenzumsetzung ist ferner festzustellen, ob ein ausgewählter bcch-Kanal der uplinkseitigen Funkschnittstelle 4 oder der downlinkseitigen Funkschnittstelle 5 zuzuordnen ist. Zu diesem Zweck werden in einem weiteren Schritt 8 die auf den ausgewählten bcch-Kanälen zur Identifikation gesendeten Kanalnummern mit den empfängerseitig 1 eingestellten Kanälen verglichen. Stimmen diese Kanalnummern überein, so handelt es sich um die downlinkseitige Funkschnittstelle 5 zur Mobilstation 2, da in jedem Funknetz an eine Mobilstation 2 die richtigen Kanalnummern gesendet werden, während bei einer Frequenzumsetzung die uplinkseitig des Repeaters ausgetauschten Informationen infolge der Frequenzumsetzung nicht die richtigen Kanäle bezeichnen. Im Schritt 8 werden zunächst sämtliche bcch-Kanäle der uplinkseitigen Schnittstelle 4 ermittelt. In einem darauf folgenden Schritt 9 werden sodann die dort gesendeten Kanalinformationen 9 gelesen, um die Kanäle der downlinkseitigen Funkschnittstelle 5 zu ermitteln. Außerdem wird in diesem Schritt 9 aus den solchermaßen ermittelten Funkkontrollkanälen bcch der downlinkseitigen Funkschnittstelle 5 derjenige Funkkontrollkanal f_{b} mit der höchsten Empfangsfeldstärke ausgewählt. Die Frequenz f_{b} wie auch die zugeordnete Frequenz fₐ wird in einem Speicherbaustein der Vorrichtung 1 abgespeichert.

In einem darauf folgenden Schritt 10 wird ein Sende- und Empfangszweig der erfindungsgemäßen Vorrichtung 1 downlinkseitig 5 auf die Frequenz f_{b} des aufgefundenen Funkkontrollkanals eingestellt, während uplinkseitig 4 die zugeordnete Frequenz fₐ eingestellt wird, und bezüglich dieses Kanals kann nun ein erster Betrieb der erfindungsgemäßen Sende- und Empfangsvorrichtung 1 aufgenommen werden.

Durch diese Auswahl eines optimalen Funkkontrollkanals hat sich die erfindungsgemäße Vorrichtung 1 bereits einer Funkzelle des Funknetzes zugeordnet. Da die Kanalzuweisungen innerhalb eines Funknetzes von dem Betreiber unter besonderen Gegebenheiten geändert werden können, führt die erfindungsgemäße Vorrichtung 1 auf dem betreffenden Funkkontrollkanal regelmäßig Feldstärkemessungen und Meldungsauswertungen durch, um Änderungen sofort registrieren zu können.

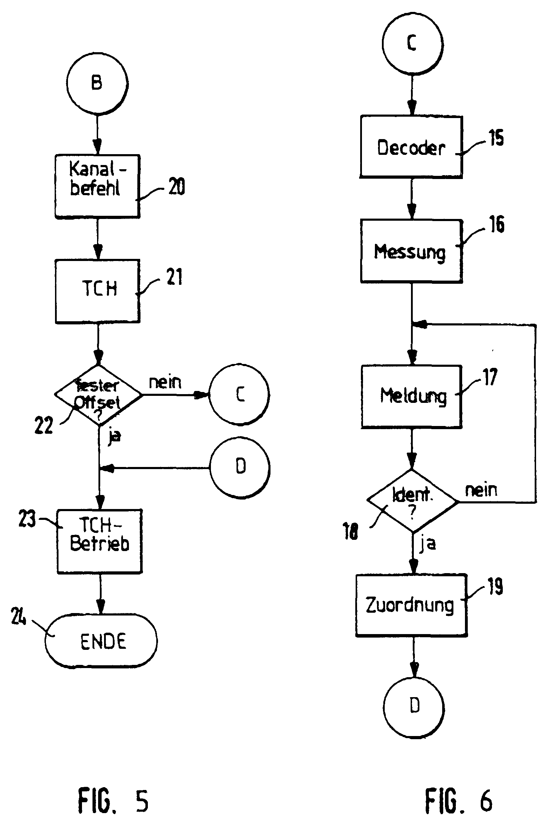

Das in der Kanalerkennungseinrichtung der erfindungsgemäßen Vorrichtung 1 abgelegte Programm wird nach Erreichen des Ereignisses A an dem entsprechenden Programmpunkt A in Fig. 4 fortgesetzt. Die Programmsequenz zwischen den Punkten A und B dient der Ermittlung eines der Funkzelle zugeordneten Steuerkanals und kann mehrmals durchlaufen werden, um alle in der betreffenden Funkzelle verwendeten Steuerkanäle herauszufinden.

Zunächst befindet sich das Programm in dem Zustand 11, wo durch Dekodierung des eingestellten Funkkontrollkanals auf einen von der ortsfesten Sendestation 3 gesendeten Kanalbefehl gewartet wird. Sodann wird in einem weiteren Schritt 12 dieser Kanal eingestellt. Bei einer Funkzelle mit einem frequenzumsetzenden Repeater handelt es sich hierbei um die downlinkseitige 5 Frequenz, und es gilt nun, die hierzu passende, uplinkseitige 4 Frequenz zu ermitteln.

Die Kanalerkennungsvorrichtung der Sende- und Empfangsvorrichtung 1 fragt hierzu zunächst unter den zu dem betreffenden Funknetz abgespeicherten Informationen nach, ob dieses Funknetz Informationsmeldungen zur Verfügung stellt oder einen gleichbleibenden Frequenzoffset zwischen up- und downlinkseitigen Funkschnittstellen 4, 5 verwendet (Abfrage 13). In diesen Fällen kann der uplinkseitige Funkkanal 4 aus den gesendeten Meldungen oder aus dem festen Kanaloffset ermittelt werden, und die erfindungsgemäße Vorrichtung 1 kann sofort den vollständigen Übertragungsbetrieb 14 bezüglich dieses Steuerkanals 12 aufnehmen.

Werden von dem betreffenden Funknetz weder Informationsmeldungen zur Verfügung gestellt noch ein fester Kanaloffset verwendet, muß zur Ermittlung der uplinkseitigen Sendefrequenz 4 ein weiterer Programmteil zwischen den Programmpunkten C und D durchlaufen werden (Figur 6). Hierbei wird in einem Schritt 15 die Information des downlinkseitigen 5 Steuerkanals dekodiert. In einem weiteren Schritt 16 werden die weiteren Kanäle durch Feldstärkemessung ausgewählt und die übertragenen Informationen dekodiert 17. Nun wird in einem Schritt 18 kanalweise überprüft, ob die in den Schritten 15, 17 dekodierten Meldungen übereinstimmen. Ist dies der Fall, werden diese Kanäle einander zugeordnet 19 und in dieser Form abgespeichert. Sind die verglichenen Informationen nicht identisch, werden die Informationen weiterer Kanäle dekodiert 17 und abermals mit dem Referenzsignal 15 verglichen.

Mit der gefundenen Zuordnung 19 springt das Programm nach Erreichen des Punktes D wieder in die Programmsequenz A - B gemäß Figur 3 und ist nun in der Lage, zu dem gefundenen Steuerkanal einen eigenen Sende- und Empfangszweig mit uplinkseitiger und downlinkseitiger Funkschnittstelle 4, 5 einzurichten.

Um auch die für die eigentliche Kommunikation verwendeten Verkehrskanäle zu ermitteln, wird das Programm an dem Punkt D mit dem entsprechenden Programmteil in Figur 4 fortgesetzt. Hierbei entspricht die Phase 20 weitgehend dem Betriebszustand 14, d.h., die erfindungsgemäße Vorrichtung 1 überträgt den betreffenden Steuerkanal sdcch und dekodiert diesen gleichzeitig, um einen Kanalbefehl zu erkennen. Solchenfalls wird in dem folgenden Schritt 21 ein Sende- und Empfangszweig auf den betreffenden Verkehrskanal tch eingestellt. Bei einer Funkzelle ohne Frequenzumsetzung müßte dies sowohl für die uplinkseitige 4 als auch für die downlinkseitige 5 Funkschnittstelle erfolgen. Bei einer Funkzelle mit Frequenzumsetzung wird in dem folgenden Schritt 22 abgefragt, ob bei dem betreffenden Funknetz Informationsmeldungen zur Verfügung gestellt werden oder ob ein fester Frequenzoffset zwischen up- und downlinkseitigen Funkschnittstellen 4, 5 eingehalten ist. Ist dies der Fall, kann der uplinkseitige 4 Kanal sofort ermittelt, gespeichert und an dem betreffenden Sende- und Empfangszweig eingestellt 23 werden, womit das Programm einen vorläufigen Endpunkt 24 erreicht. Findet in der betreffenden Funkzelle eine Frequenzumsetzung statt, und wird weder eine Meldung zur Verfügung gestellt noch ein fester Frequenzoffset eingehalten, muß das Programm abermals die Programmsequenz zwischen den Punkten E und F ausführen, um den uplinkseitigen 4 Verkehrskanal tch zu ermitteln.

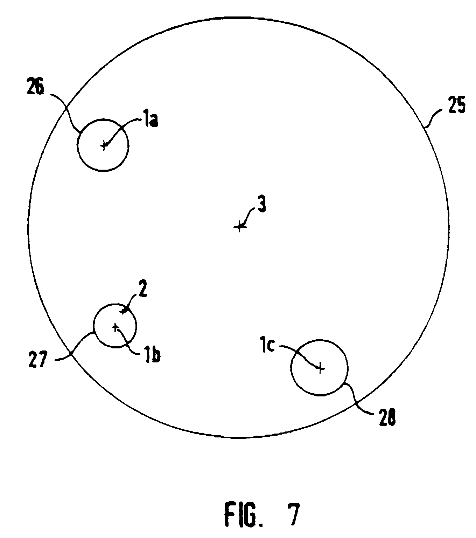

Figur 7 stellt einen Ausschnitt aus einem Funknetz dar mit einer ortsfesten Sendestation 3, welche eine Funkzelle 25 versorgt. An drei voneinander unabhängigen Orten, bspw. größeren Bürogebäuden, ist jeweils eine erfindungsgemäße Sende- und Empfangsvorrichtung 1a, 1b, 1c aufgestellt. Diese erzeugen jeweils eine eigene Funkzone 26, 27, 28, in der sich die downlinkseitigen Frequenzen 5 von den uplinkseitigen Anbindefrequenzen 4 zu der zentralen Sendestation 3 unterscheiden. Jede dieser von den Nutzern des betreffenden Funknetzes aufgestellten Sende- und Empfangsvorrichtungen 1a, 1b, 1c haben die Möglichkeit, sich einen der von der ortsfesten Sendestation 3 verwendeten bcch-Kanal zuzuordnen. Wird hierbei der bcch-Kanal der Funkzelle 25 verwendet, so müssen die erfindungsgemäßen Vorrichtungen 1a, 1b, 1c up- und downlinkseitig mit denselben Frequenzen betrieben werden, was zu Interferenzen führen kann. Es kann deshalb vorgesehen sein, daß der Netzbetreiber eben zu dem Zweck einer kundenspezifischen Verdichtung seines Funknetzes in einer oder mehreren, ortsfesten Funkstationen 3 zusätzliche Kanäle eigens für die Anbindung kundenspezifischer Sende- und Emfpangsvorrichtungen 1a, 1b, 1c reserviert, welche einen Betrieb mit Frequenzumsetzung ermöglichen. Da hierbei die von der ortsfesten Sendestation 3 abgestrahlten, tatsächlichen Sendefrequenzen mit den dort gesendeten Kanalnummern nicht übereinstimmen, sind diese Kanäle für eine direkte Kommunikation mit einer Mobilstation 2 ungeeignet. Wird jedoch eine zusätzliche Sendeund Empfangsvorrichtung 1a installiert, kann diese sich wahlweise der bereits bestehenden Funkzelle 25 zuordnen oder sich mit Hilfe eines von der ortsfesten Sendestation 3 reservierten, zusätzlichen Kanals durch Frequenzumsetzung eine eigene Funkzelle 26 schaffen.

Um für eine derartige Auswahl ein ausreichendes Entscheidungskriterium vorzufinden, kann auf den bcch-Kanälen der ortsfesten Sendestation 3 eine Prioritätsmeldung gesendet werden, welche sich an zusätzlich installierte Sende- und Empfangsvorrichtungen 1a - 1c wendet und diesen mitteilt, welcher Funkzelle sich diese zuordnen soll, sofern hinsichtlich der Empfangsfeldstärke eine Auswahl möglich ist. Aufgrund dieser Prioritätsempfehlung haben sich bspw. die Sende- und Empfangsvorrichtungen 1a, 1b unter Nutzung desselben bcch-Kanals mit ihren Funkzonen 26, 27 einer frequenzmäßig nicht unterschiedenen, zweiten Funkzelle zugeordnet, die jedoch gegenüber der ursprünglichen Funkzelle 25 mit Frequenzumsetzung, d.h., mit einer frequenzmäßigen Abgrenzung, betrieben wird.

Nun wird auf den Kanälen dieser zweiten Funkzelle 26, 27 vom Netzbetreiber der dort stattfindende Verkehr gemessen und festgestellt, daß diese Kanäle ausgelastet sind. Deshalb wird von der ortsfesten Sendestation 3 nun auf den Funkkontrollkanälen bcch eine zusätzliche Blockierungsmeldung gesendet, welche der weiteren, später zu installierenden Sende- und Empfangsvorrichtung 1c signalisiert, daß diese sich trotz der Empfehlung nicht der bereits überfüllten, zweiten Funkzelle 26, 27 zuordnen soll, sondern unter Nutzung weiterer, zusätzlicher Frequenzen eine eigene, von den bereits bestehenden Funkzellen 25; 26, 27 unterscheidbare Funkzelle 28 schaffen soll.

Auf diesem Weg kann trotz einer weitgehend individuell gestalteten Funknetzgeografie die frequenzmäßige Zuordnung weitgehend von dem Netzbetreiber gesteuert werden, so daß dieser die Kontrolle über sein Funknetz behält.

Durch feldstärke- oder meldungsabhängiges Abschalten eines Sendezweigs der erfindungsgemäßen Sende- und Empfangsvorrichtung 1 kann das Grundrauschen sowie die Interferenzen in der betreffenden Funkzelle weiter reduziert werden.

## Patentansprüche

1. Sende- und Empfangsvorrichtung (1) zur Verstärkung der Sendesignale (4, 5) zwischen einer ortsfesten, uplinkseitigen, und einer mobilen, downlinkseitigen Sende- und Empfangsstation (3, 2) in einem flächendeckenden Funknetz, mit wenigstens einer Antenne zur Anbindung an die ortsfeste Sende-/Empfangsstation, mit wenigstens einem an die Antenne angeschlossenen, kanalselektiven Filter, mit wenigstens einer an dem Filterausgang angeschlossenen Einrichtung zur Messung der Empfangsfeldstärke des betreffenden Kanals, mit wenigstens einer Einrichtung zur Demodulation und Dekodierung des kanalselektiv gefilterten Funksignals, und mit einer Vorrichtung zur Erkennung der in einer Funkzelle (25) des Funknetzes verwendeten Funkkanäle bzw. -frequenzen, **dadurch gekennzeichnet, dass** die Vorrichtung zur selbsttätigen Erkennung der in einer Funkzelle (25) des Funknetzes verwendeten Funkkanäle bzw. -frequenzen derart ausgebildet ist, dass in einem ersten Schritt (7) die Empfangsfeldstärke der einem Funknetz zugewiesenen Kanäle ermittelt und aus den Kanälen mit der größten Empfangsfeldstärke einer oder mehrere Funkkontrollkanäle, broadcast control channel, ermittelt werden (8), und daß diese im folgenden decodiert (11, 15) werden, um an Hand der dort gesendeten Informationen die Kanäle bzw. Frequenzen eines oder mehrerer zugeordneter Steuerkanäle, slow dedicated control channel, und/oder Verkehrskanäle, traffic channel, zu ermitteln.

2. Sende- und Empfangsvorrichtung nach Anspruch 1, **gekennzeichnet durch** einen oder mehrere parallele und/oder antiparallele Sende- und Empfangszweige.

3. Sende- und Empfangsvorrichtung nach Anspruch 1 oder 2, **dadurch gekennzeichnet, daß** die Bandbreite der Sende- und Empfangszweige jeweils einen oder mehrere Funkkanäle umfaßt.

4. Sende- und Empfangsvorrichtung nach einem der Ansprüche 1 bis 3, **dadurch gekennzeichnet, daß** die Sende- bzw. Empfangsfrequenzen der Sende- und Empfangszweige unabhängig voneinander einstellbar sind.

5. Sende- und Empfangsvorrichtung nach einem der vorhergehenden Ansprüche, **dadurch gekennzeichnet, daß** die Frequenzen der uplink- und downlinkseitigen Funkschnittstellen eines Sende- und Empfangszweigs unabhängig voneinander einstellbar sind.

6. Sende- und Empfangsvorrichtung nach einem der vorhergehenden Ansprüche, **gekennzeichnet durch** ein Gehäuse, in dem eine uplinkseitige und eine downlinkseitige Antenne integriert ist.

7. Sende- und Empfangsvorrichtung nach einem der vorhergehenden Ansprüche, **dadurch gekennzeichnet, daß** für die uplinkseitige und die downlinkseitige Funkschnittstelle eine gemeinsame Antenne vorhanden ist.

8. Sende- und Empfangsvorrichtung nach einem der vorhergehenden Ansprüche, **dadurch gekennzeichnet, daß** die Einrichtungen zur Messung der Empfangsfeldstärke jeweils einem Sende- und Empfangszweig zugeordnet sind.

9. Sende- und Empfangsvorrichtung nach einem der vorhergehenden Ansprüche, **dadurch gekennzeichnet, daß** die Einrichtungen zur Demodulation und/oder Dekodierung jeweils einem Sende- und Empfangszweig zugeordnet sind.

10. Sende- und Empfangsvorrichtung nach einem der vorhergehenden Ansprüche, **gekennzeichnet durch** einen oder mehrere Bausteine zum Vergleich des einer tatsächlich verwendeten Kanalfrequenz zugeordneten Funkkanals mit dem auf der betreffenden Frequenz empfangenen und demodulierten bzw. dekodierten Kanalnummer.

11. Sende- und Empfangsvorrichtung nach Anspruch 10, **dadurch gekennzeichnet, daß** die Vergleichsbausteine jeweils einem Sende- und Empfangszweig zugeordnet sind.

12. Sende- und Empfangsvorrichtung nach einem der vorhergehenden Ansprüche, **gekennzeichnet durch** einen Speicher zur Abspeicherung der erkannten Funkkanäle bzw. -frequenzen.

13. Verfahren zum Betrieb der Kanalerkennungsvorrichtung einer Sende- und Empfangsvorrichtung nach einem der vorhergehenden Ansprüche, **dadurch gekennzeichnet, daß** in einem ersten Schritt (7) die Empfangsfeldstärke der einem Funknetz zugewiesenen Kanäle ermittelt und aus den Kanälen mit der größten Empfangsfeldstärke einer oder mehrere Funkkontrollkanäle, broadcast control channel, ermittelt werden (8), und daß diese im folgenden decodiert (11, 15) werden, um an Hand der dort gesendeten Informationen die Kanäle bzw. Frequenzen eines oder mehrerer zugeordneter Steuerkanäle, slow dedicated control channel, und/oder Verkehrskanäle, traffic channel, zu ermitteln.

14. Verfahren nach Anspruch 13, **dadurch gekennzeichnet, daß** auf den Funkkontrollkanälen in vorgegebenen Zeitabständen Meldungen gesendet werden, die Informationen über die in der betreffenden Funkzelle verwendeten Kanäle bzw. Frequenzen enthalten, und daß diese Meldungen von der Kanalerkennungsvorrichtung ausgewertet werden.

15. Verfahren nach Anspruch 13 oder 14, **dadurch gekennzeichnet, daß** auf den Funkkontrollkanälen in vorgegebenen Zeitabständen Meldungen gesendet werden, die Informationen darüber enthalten, ob in der betreffenden Funkzelle (25) ein frequenzumsetzender Repeater installiert ist, und daß diese Meldungen von der Kanalerkennungsvorrichtung ausgewertet werden

16. Verfahren nach einem der Ansprüche 13 bis 15, **dadurch gekennzeichnet, daß** auf den Funkkontrollkanälen in vorgegebenen Zeitabständen Meldungen gesendet werden, die bestimmte, in der betreffenden Funkzelle (25) verwendete Frequenzoffsetwerte enthalten, und daß diese Meldungen von der Kanalerkennungsvorrichtung ausgewertet werden.

17. Verfahren nach einem der Ansprüche 13 bis 16, **dadurch gekennzeichnet, daß** auf den Funkkontrollkanälen in vorgegebenen Zeitabständen Meldungen gesendet werden, die Empfehlungen hinsichtlich der Zuordnung zu bestimmten, für die betreffende Funkzelle (25) vorgesehenen Kanälen enthalten, und daß diese Meldungen von der Kanalerkennungsvorrichtung ausgewertet werden.

18. Verfahren nach einem der Ansprüche 13 bis 17, **dadurch gekennzeichnet, daß** der Verkehr auf den Kanälen gemessen wird, und daß auf den Funkkontrollkanälen in vorgegebenen Zeitabständen Meldungen gesendet werden, welche die Aus- oder Überlastung einzelner Kanäle der betreffenden Funkzelle (25) anzeigen und von der Kanalerkennungsvorrichtung ausgewertet werden.

19. Verfahren nach einem der Ansprüche 13 bis 18, **dadurch gekennzeichnet, daß** auf den Funkkontrollkanälen gesendete Kanalbefehle von der Kanalerkennungsvorrichtung ausgewertet werden.

20. Verfahren nach einem der Ansprüche 13 bis 19, **dadurch gekennzeichnet, daß** durch Decodierung der ausgewählten Kanäle deren Kanal ermittelt wird und mit der tatsächlich empfangenen Kanalfrequenz verglichen wird.

21. Verfahren nach Anspruch 20, **dadurch gekennzeichnet, daß** zunächst nach einem Funkkontrollkanal gesucht wird, dessen tatsächliche Kanalfrequenz nicht mit der gesendeten Kanalnummer übereinstimmt (8).

22. Verfahren nach Anspruch 20 oder 21, **dadurch gekennzeichnet, daß** die uplinkseitige Sende- und Empfangseinrichtung auf die tatsächliche Kanalfrequenz (fₐ) eines Kanals, die downlinkseitige Sende- und Empfangseinrichtung auf den Kanal (f_{b}) mit der gesendeten Kanalnummer abgestimmt wird.

23. Verfahren nach einem der Ansprüche 13 bis 22, **dadurch gekennzeichnet, daß** die tatsächliche Kanalfrequenz (fₐ) eines zugeordneter Steuerkanals, slow dedicated control channel, und/oder Verkehrskanals, traffic channel, sofern dieser nicht mit der gesendeten Kanalfrequenz (f_{b}) übereinstimmt, durch Vergleich (18) der gesendeten Meldungen (15) mit den auf weiteren, hinsichtlich ihrer Empfangsfeldstärke ausgewählten Kanälen (16) gesendeten Meldungen (17) ermittelt wird.

24. Verfahren nach Anspruch 23, **dadurch gekennzeichnet, daß** für den Vergleich während eines Verbindungsaufbaus sequentiell gesendete Meldungen herangezogen werden.

25. Verfahren nach Anspruch 23 oder 24, **dadurch gekennzeichnet, daß** für den Vergleich in einer zweiten Empfangseinrichtung ein Vergleichskanal empfangen und demoduliert wird.

26. Verfahren nach einem der Ansprüche 13 bis 25, **dadurch gekennzeichnet, daß** die einander entsprechenden Kanalnummern (f_{b}) und tatsächlichen Kanalfrequenzen (fₐ) in zugeordneter Form gespeichert werden.

27. Verfahren nach einem der Ansprüche 13 bis 26, wobei die Anzahl der Sendezweige der erfindungsgemäßen Sende- und Empfangsvorrichtung (1) kleiner ist als die Anzahl der in der betreffenden Funkzelle (25) verwendeten Frequenzkanäle, **dadurch gekennzeichnet, daß** die von einer Mobilstation (2) gesendete Identifikationsnummer ausgewertet wird, um eine mobilstationsselektive Kanalumschaltung zu ermöglichen.

## Claims

1. Transmitting and receiving device (1) for amplifying the transmitted signals (4, 5) between a stationary, uplink-side, and a mobile, downlink-side transmitting and receiving station (3, 2) in an area-covering radio network, with at least one aerial for connection to the stationary transmitting/receiving station, with at least one channel-selective filter, which is connected to the aerial, with at least one device, connected to the filter output, for measuring the received field strength of the relevant channel, with at least one device for demodulating and decoding the channel-selective filtered radio signal, and with a device for identifying the radio channels or frequencies which are used in a radio cell (25) of the radio network, **characterised in that** the device for automatically identifying the radio channels or frequencies which are used in a radio cell (25) of the radio network is formed such that in a first step (7) the received field strength of the channels assigned to a radio network is established, and one or more radio control channel(s) (broadcast control channel) is/are established (8) from the channels with the greatest received field strength, and that these are subsequently decoded (11, 15) in order to establish, on the basis of the information transmitted there, the channels or frequencies of one or more associated control channel(s) (slow dedicated control channel) and/or traffic channels.

2. Transmitting and receiving device according to Claim 1, **characterised by** one or more parallel and/or antiparallel transmitting and receiving branch(es).

3. Transmitting and receiving device according to Claim 1 or 2, **characterised in that** the bandwidth of the transmitting and receiving branches in each case comprises one or more radio channel(s).

4. Transmitting and receiving device according to any one of Claims 1 to 3, **characterised in that** the transmitting and receiving frequencies of the transmitting and receiving branches can be set independently of one another.

5. Transmitting and receiving device according to any one of the preceding Claims, **characterised in that** the frequencies of the uplink- and downlink-side radio interfaces of a transmitting and receiving branch can be set independently of one another.

6. Transmitting and receiving device according to any one of the preceding Claims, **characterised by** a housing in which an uplink-side and a downlink-side aerial are integrated.

7. Transmitting and receiving device according to any one of the preceding Claims, **characterised in that** a common aerial is provided for the uplink-side and the downlink-side radio interface.

8. Transmitting and receiving device according to any one of the preceding Claims, **characterised in that** the devices for measuring the received field strength are in each case associated with a transmitting and receiving branch.

9. Transmitting and receiving device according to any one of the preceding Claims, **characterised in that** the devices for demodulating and/or decoding are in each case associated with a transmitting and receiving branch.

10. Transmitting and receiving device according to any one of the preceding Claims, **characterised by** one or more module(s) for comparing the radio channel associated with an channel frequency actually used with the channel number received at the relevant frequency and demodulated or decoded.

11. Transmitting and receiving device according to Claim 10, **characterised in that** the comparison modules are in each case associated with a transmitting and receiving branch.

12. Transmitting and receiving device according to any one of the preceding Claims, **characterised by** a memory for storing the identified radio channels or frequencies.

13. Method for operating the channel identification device of a transmitting and receiving device according to any one of the preceding Claims, **characterised in that** in a first step (7) the received field strength of the channels assigned to a radio network is established, and one or more radio control channel(s) (broadcast control channel) is/are established (8) from the channels with the greatest received field strength, and that these are subsequently decoded (11, 15) in order to establish, on the basis of the information transmitted there, the channels or frequencies of one or more associated control channel(s) (slow dedicated control channel), and/or traffic channels (traffic channel).

14. Method according to Claim 13, **characterised in that** messages are transmitted on the radio control channels at predetermined time intervals, which messages contain information on the channels or frequencies used in the relevant radio cell, and that these messages are evaluated by the channel identification device.

15. Method according to Claim 13 or 14, **characterised in that** messages are transmitted on the radio control channels at predetermined time intervals, which messages contain information as to whether a frequency-converting repeater is installed in the relevant radio cell (25), and that these messages are evaluated by the channel identification device.

16. Method according to any one of Claims 13 to 15, **characterised in that** messages are transmitted on the radio control channels at predetermined time intervals, which messages contain certain frequency offset values which are used in the relevant radio cell (25), and that these messages are evaluated by the channel identification device.

17. Method according to any one of Claims 13 to 16, **characterised in that** messages are transmitted on the radio control channels at predetermined time intervals, which messages contain recommendations regarding the association with certain channels provided for the radio cell (25) relevant, and that these messages are evaluated by the channel identification device.

18. Method according to any one of Claims 13 to 17, **characterised in that** the traffic on the channels is measured, and that messages are transmitted on the radio control channels at predetermined time intervals, which messages indicate the utilisation or overload of individual channels of the relevant radio cell (25) and are evaluated by the channel identification device.

19. Method according to any one of Claims 13 to 18, **characterised in that** channel commands transmitted on the radio control channels are evaluated by the channel identification device.

20. Method according to any one of Claims 13 to 19, **characterised in that**, by decoding the selected channels, the channel thereof is established and compared with the channel frequency actually received.

21. Method according to Claim 20, **characterised in that** a radio control channel is firstly sought whose actual channel frequency does not correspond (8) to the transmitted channel number.

22. Method according to Claim 20 or 21, **characterised in that** the uplink-side transmitting and receiving device is tuned to the actual channel frequency (fₐ) of a channel, the downlink-side transmitting and receiving device to the channel (f_{b}) with the transmitted channel number.

23. Method according to any one of Claims 13 to 22, **characterised in that**, if it does not correspond to the transmitted channel frequency (f_{b}), the actual channel frequency (fₐ) of an associated control channel (slow dedicated control channel) and/or traffic channel is established by comparing (18) the transmitted messages (15) with the messages (17) transmitted on further channels (16) selected with regard to their received field strength.

24. Method according to Claim 23, **characterised in that** sequentially transmitted messages are used for comparison during a connection set-up.

25. Method according to Claim 23 or 24, **characterised in that** a comparison channel is received in a second receiving device and demodulated for the comparison.

26. Method according to any one of Claims 13 to 25, **characterised in that** the mutually corresponding channel numbers (f_{b}) and actual channel frequencies (fₐ) are stored in associated form.

27. Method according to any one of Claims 13 to 26, wherein the number of transmitting branches of the transmitting and receiving device (1) according to the invention is smaller than the number of frequency channels used in the relevant radio cell (25), **characterised in that** the identification number transmitted by a mobile station (2) is evaluated in order to permit mobile station-selective channel switching.

## Revendications

1. Dispositif d'émission et de réception (1) pour l'amplification des signaux d'émission (4, 5) entre une station d'émission et de réception fixe (3), côté liaison montante, et une station d'émission et de réception mobile (2), côté liaison descendante, dans un réseau cellulaire de transmission radio, comportant au moins une antenne destinée à être reliée à la station d'émission/de réception fixe, au moins un filtre sélectif à l'égard des canaux, raccordé à l'antenne, au moins un appareil raccordé à la sortie du filtre pour la mesure de l'intensité de champ de réception du canal concerné, au moins un appareil pour la démodulation et le décodage du signal radio, qui a fait l'objet du filtrage sélectif, et un dispositif destiné à identifier les canaux ou fréquences radio, utilisés dans une cellule de transmission radio (25) du réseau de transmission radio, **caractérisé en ce que** le dispositif destiné à identifier automatiquement les canaux ou fréquences radio, utilisés dans une cellule de transmission radio (25) du réseau de transmission radio, est conçu d'une manière telle, que dans une première étape (7), l'intensité de champ de réception des canaux dirigés vers un réseau de transmission radio est déterminée et qu'à partir des canaux présentant la plus grande intensité de champ de réception, un ou plusieurs canaux de contrôle de transmission radio, broadcast control channel, sont déterminés (8), et **en ce que** ceux-ci sont par la suite décodés (11, 15), pour à l'aide des informations qui y sont émises, déterminer les canaux ou les fréquences d'un ou de plusieurs canaux de commande associés, slow dedicated control channel, et/ou de canaux de conversation associés, traffic channel.

2. Dispositif d'émission et de réception selon la revendication 1, **caractérisé par** une ou plusieurs branches d'émission et de réception parallèles et/ou orientées en tête-bêche.

3. Dispositif d'émission et de réception selon la revendication 1 ou 2, **caractérisé en ce que** la bande passante de chacune des branches d'émission et de réception couvre un ou plusieurs canaux radio.

4. Dispositif d'émission et de réception selon l'une des revendications 1 à 3, **caractérisé en ce que** les fréquences d'émission ou de réception des branches d'émission et de réception sont réglables indépendamment les unes des autres.

5. Dispositif d'émission et de réception selon l'une des revendications précédentes, **caractérisé en ce que** les fréquences des interfaces de transmission radio, dans le sens de la liaison montante et le sens de la liaison descendante, d'une branche d'émission et de réception sont réglables indépendamment l'une de l'autre.

6. Dispositif d'émission et de réception selon l'une des revendications précédentes, **caractérisé par** un boîtier dans lequel une antenne pour la liaison montante et une antenne pour la liaison descendante sont intégrées.

7. Dispositif d'émission et de réception selon l'une des revendications précédentes, **caractérisé en ce qu'**une antenne commune est présente pour l'interface de transmission radio dans le sens de la liaison montante et l'interface de transmission radio dans le sens de la liaison descendante.

8. Dispositif d'émission et de réception selon l'une des revendications précédentes, **caractérisé en ce que** les appareils de mesure de l'intensité de champ de réception sont associés chacun à une branche d'émission et de réception.

9. Dispositif d'émission et de réception selon l'une des revendications précédentes, **caractérisé en ce que** les appareils de démodulation et/ou de décodage sont associés chacun à une branche d'émission et de réception.

10. Dispositif d'émission et de réception selon l'une des revendications précédentes, **caractérisé par** un ou plusieurs modules pour la comparaison du canal radio associé à une fréquence de canal réellement utilisée, avec le numéro de canal reçu sur la fréquence considérée et démodulé ou décodé.

11. Dispositif d'émission et de réception selon la revendication 10, **caractérisé en ce que** les modules de comparaison sont associés chacun à une branche d'émission et de réception.

12. Dispositif d'émission et de réception selon l'une des revendications précédentes, **caractérisé par** une mémoire destinée à mémoriser les canaux ou fréquences radio identifiés.

13. Procédé pour l'exploitation du dispositif d'identification de canaux d'un dispositif d'émission et de réception selon l'une des revendications précédentes, **caractérisé en ce que** dans une première étape (7), l'intensité de champ de réception des canaux dirigés vers un réseau de transmission radio est déterminée et, à partir des canaux présentant la plus grande intensité de champ de réception, un ou plusieurs canaux de contrôle de transmission radio, broadcast control channel, sont déterminés (8) et **en ce que** ceux-ci sont par la suite décodés (11, 15), pour à l'aide des informations qui y sont émises, permettre de déterminer les canaux ou fréquences d'un ou de plusieurs canaux de commande associés, slow dedicated control channel, et/ou de canaux de conversation associés, traffic channel.

14. Procédé selon la revendication 13, **caractérisé en ce que** sur les canaux de contrôle de transmission radio, sont envoyés, à intervalles de temps pré-établis, des messages qui contiennent des informations sur les canaux ou fréquences utilisés dans la cellule de transmission radio concernée, et **en ce que** ces messages sont interprétés par le dispositif d'identification de canaux.

15. Procédé selon la revendication 13 ou 14, **caractérisé en ce que** sur les canaux de contrôle de transmission radio, sont envoyés, à intervalles de temps pré-établis, des messages qui contiennent des informations indiquant si un répétiteur à conversion de fréquence est installé dans la cellule de transmission radio concernée (25), et **en ce que** ces messages sont interprétés par le dispositif d'identification de canaux.

16. Procédé selon l'une des revendications 13 à 15, **caractérisé en ce que** sur les canaux de contrôle de transmission radio, sont envoyés, à intervalles de temps pré-établis, des messages qui contiennent des valeurs déterminées de décalage de fréquence, utilisées dans la cellule de transmission radio concernée (25), et **en ce que** ces messages sont interprétés par le dispositif d'identification de canaux.

17. Procédé selon l'une des revendications 13 à 16, **caractérisé en ce que** sur les canaux de contrôle de transmission radio, sont envoyés, à intervalles de temps pré-établis, des messages qui contiennent des recommandations portant sur l'affectation à des canaux déterminés, prévus pour la cellule de transmission radio concernée (25), et **en ce que** ces messages sont interprétés par le dispositif d'identification de canaux.

18. Procédé selon l'une des revendications 13 à 17, **caractérisé en ce que** le trafic sur les canaux est mesuré, et **en ce que** sur les canaux de contrôle de transmission radio, sont envoyés, à intervalles de temps pré-établis, des messages qui signalent la capacité ou le dépassement de capacité de différents canaux de la cellule de transmission radio concernée (25) et qui sont interprétés par le dispositif d'identification de canaux.

19. Procédé selon l'une des revendications 13 à 18, **caractérisé en ce que** des instructions de canaux, envoyées sur les canaux de contrôle de transmission radio, sont interprétées par le dispositif d'identification de canaux.

20. Procédé selon l'une des revendications 13 à 19, **caractérisé en ce que** par décodage des canaux sélectionnés, leur fréquence est déterminée et est comparé à la fréquence de canal réellement reçue.

21. Procédé selon la revendication 20, **caractérisé en ce qu'**il est tout d'abord recherché un canal de contrôle de transmission radio, dont la fréquence réelle de canal ne coïncide pas (8) avec le numéro de canal envoyé.

22. Procédé selon la revendication 20 ou 21, **caractérisé en ce que** l'appareil d'émission et de réception situé côté liaison montante est accordé sur la fréquence réelle (fₐ) d'un canal, et l'appareil d'émission et de réception situé côté liaison descendante est accordé sur le canal (f_{b}) ayant le numéro de canal envoyé.

23. Procédé selon l'une des revendications 13 à 22, **caractérisé en ce que** la fréquence réelle (fₐ) d'un canal de commande associé, slow dedicated control channel, et/ou d'un canal de conversation associé, traffic channel, pour autant qu'elle ne coïncide pas avec la fréquence de canal envoyée (f_{b}), est déterminée par comparaison (18) des messages envoyés (15) avec les messages (17) envoyés sur d'autres canaux (16) sélectionnés relativement à leur intensité de champ de réception.

24. Procédé selon la revendication 23, **caractérisé en ce que** pour la comparaison, des messages envoyés en succession sont extraits pendant l'établissement d'une liaison.

25. Procédé selon la revendication 23 ou 24, **caractérisé en ce que** pour la comparaison, un canal de comparaison est reçu et démodulé dans un second appareil de réception.

26. Procédé selon l'une des revendications 13 à 25, **caractérisé en ce que** les numéros de canal (f_{b}) et les fréquences de canal réelles (fₐ), qui sont en correspondance mutuelle, sont mémorisés sous la forme d'une association.

27. Procédé selon l'une des revendications 13 à 26, selon lequel le nombre des branches d'émission du dispositif d'émission et de réception (1) conforme à l'invention est inférieur au nombre des canaux de fréquence utilisés dans la cellule de transmission radio concernée (25), **caractérisé en ce que** le numéro d'identification adressé par une station mobile (2) est évalué, pour permettre une commutation de canal sélective à l'égard des stations mobiles.
